# FASCICULE DE BREVET EUROPEEN

(11) **EP 1 519 840 B1**
(45) Date de publication et mention de la délivrance du brevet: **01.10.2008**
(21) Numéro de dépôt: 02762535.9
(22) Date de dépôt: 05.07.2002
(51) Int. Cl.: B41M 3/14, B42D 15/10, G03H 1/02

(54) **PROCEDE DE REALISATION EN SERIE DE DOCUMENTS SECURISES ET MACHINE DE MISE EN OEUVRE**
SERIELLES HERSTELLUNGSVERFAHREN FÜR SICHERHEITSDOKUMENTE UND ZUGEHÖRIGE VORRICHTUNG
METHOD FOR SERIAL PRODUCTION OF SECURE DOCUMENTS AND MACHINE THEREFOR

(43) Date de publication de la demande: 06.04.2005
(73) Titulaire: Thales, 75008 Paris (FR)
(72) Inventeur: GUIONNET, Sebastien, Thales Intellectual Property, 94117 Arcueil Cedex (FR); AGERON, Jérôme, Thales Intellectual Property, 94117 Arcueil Cedex (FR); BRICOT, Claude, Thales Intellectual Property, 94117 Arcueil Cedex (FR); ROBIN, Philippe, Thales Intellectual Property, 94117 Arcueil Cedex (FR); THEBAULT, Yves, Thales Intellectual Property, 94117 Arcueil Cedex (FR)
(74) Mandataire: Chaverneff, Vladimir
(86) Numéro de dépôt international: PCT/FR2002/002368
(87) Numéro de publication internationale: WO 2004/005038

(56) Documents cités:
- WO-A-00/53423
- FR-A- 2 780 915
- FR-A- 2 796 184
- FR-A- 2 826 135
- US-A- 5 948 199

## Description

La présente invention se rapporte à un procédé de production en série d'objets sécurisés, ainsi qu'à une machine de mise en oeuvre de ce procédé.

Les éléments de sécurité utilisés pour authentifier les documents d'identité sont généralement des éléments impersonnels (figures holographiques quelconques ...) et récurrents (les mêmes pour toute une grande série de documents). Ils sont donc peu efficaces dans la lutte contre les falsifications et les contrefaçons. Par exemple, on retrouve sur toutes les cartes de crédit le même hologramme, représentant le même motif. Dans le cas des cartes d'identité, on retrouve toujours les mêmes motifs. La falsification ou la contrefaçon est alors facile, dès lors que l'on ne dégrade pas ces éléments de sécurité ou que l'on se les procure.

La personnalisation des éléments de sécurité réduit considérablement les possibilités de falsification et rend la contrefaçon très difficile. Un élément de sécurité personnalisé est un composant reprenant une ou plusieurs informations de la carte. Toute modification d'une information contenue à la fois sur la carte et dans l'élément de sécurité, une photographie du titulaire, un nom ou un numéro par exemple, doit s'accompagner de la modification correspondante de l'élément de sécurité. Par conséquent, il est alors nécessaire de contrefaire non seulement cet élément, mais aussi son environnement : il faut disposer de la matière première de son support et des compétences techniques pour le reproduire.

Les éléments de sécurité optiques, en particulier les hologrammes, sont les plus efficaces contre la falsification et la contrefaçon. En effet, l'hologramme, grâce à ses propriétés physiques, possède le double avantage de ne pouvoir être copié par reprographie (à l'aide de « toner ») ou autre procédé de photocopie, et d'avoir un effet visuel fort. Cependant, on ne sait pas encore actuellement personnaliser en temps réel des hologrammes. Les hologrammes connus sont soit des hologrammes estampés, soit des hologrammes de volume enregistrés dans l'épaisseur de matériaux photosensibles de type argentique. Dans ces deux cas, le procédé d'enregistrement fait appel à des techniques non compatibles avec les procédés industriels de fabrication de cartes. Par exemple, la révélation des hologrammes de volume enregistrés dans des matériaux argentiques nécessite l'emploi et la manipulation de produits chimiques liquides.

Par ailleurs, on sait enregistrer en temps réel des hologrammes grâce à l'utilisation de nouveaux matériaux photosensibles de type photopolymère, et ce, en ayant recours à des méthodes industrielles classiques. Le procédé d'enregistrement d'hologrammes avec ces nouveaux matériaux présente l'avantage d'être totalement sec, contrairement aux autres procédés précités, qu'ils fassent appel à des matériaux argentiques ou à base de gélatine bichromatée.

Un système permettant la fabrication complète d'un document d'identité contenant un hologramme personnalisé est un système complexe. Cette complexité rend impossible la production à l'échelle locale de ce type de document sur des machines simples. En effet, outre les modules classiques d'impression et de lamination, la machine doit comporter un module d'enregistrement d'hologrammes composé d'un émetteur laser et d'un montage optique sophistiqué. La synchronisation de l'ensemble des modules est difficile à réaliser. De plus, l'enregistrement d'un tel composant optique impose des conditions de stabilité très contraignantes pour l'ensemble du système. Enfin, le temps d'enregistrement de l'hologramme limite considérablement le débit de production des cartes. La mise en oeuvre et la maintenance d'un tel système imposent un suivi permanent par des opérateurs qualifiés.

La présente invention a pour objet un procédé de réalisation de documents sécurisés à hologrammes identifiant de façon certaine les documents sur lesquels ils sont apposés, sans risque de confusion avec des hologrammes standard classiques, procédé qui puisse être mis en oeuvre à l'aide de méthodes industrielles classiques, de façon simple et rapide, en grandes séries, tout en produisant des documents qui soient très difficiles à falsifier ou à contrefaire.

La présente invention a également pour objet une machine de mise en oeuvre de ce procédé, machine qui soit rapide et sûre, d'emploi simple et ne nécessitant qu'un minimum d'entretien.

Le procédé conforme à l'invention consiste d'une part à enregistrer en série sur une bande de film photosensible une succession d'hologrammes de volume relatifs chacun respectivement à une information d'un document correspondant à sécuriser, chacun de ces hologrammes étant accompagné d'un code d'identification et de positionnement imprimé sur le même film, à révéler et à fixer les hologrammes ainsi enregistrés, et d'autre part, à imprimer en même temps les documents d'identité avec leurs codes d'identification individuels qui sont les mêmes que ceux des hologrammes correspondants respectifs, à ajouter un adhésif aux hologrammes après leur fixation, à assembler par collage chaque hologramme avec le document correspondant après vérification de la concordance de leurs codes d'identification respectifs, et, de préférence à recouvrir l'ensemble d'une protection qui est avantageusement sécurisée.

La machine conforme à l'invention comporte une station d'enregistrement holographique et d'impression de code d'identification, une station de révélation d'hologramme, une station d'ajout de film colorisant, une station de fixation, une station d'ajout d'adhésif, une station d'impression de documents et une station de collage des hologrammes sur les documents et une station de lamination.

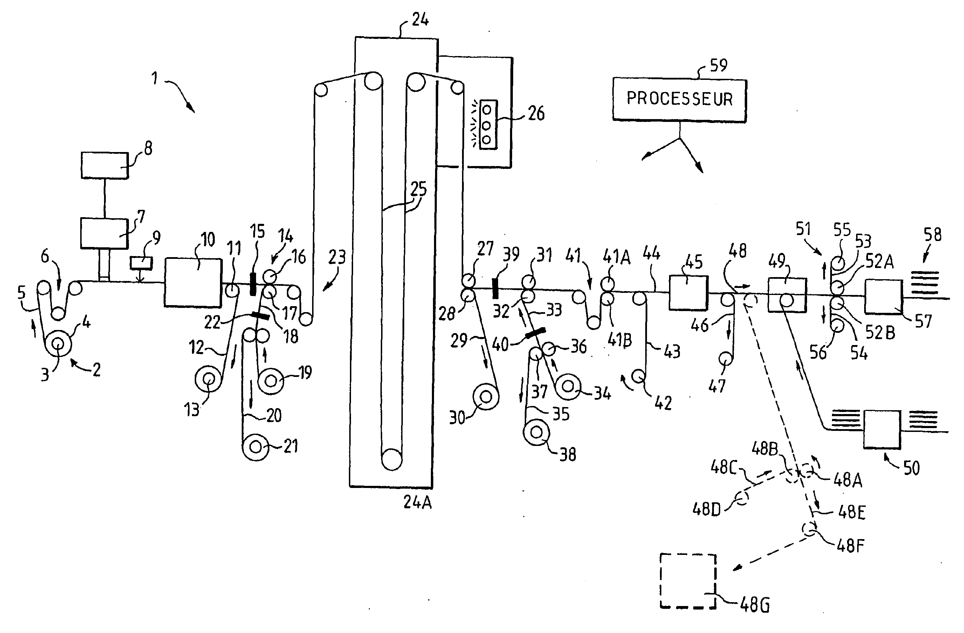

La présente invention sera mieux comprise à la lecture de la description détaillée d'un mode de mise en oeuvre, pris à titre d'exemple non limitatif et illustré par le dessin annexé, dont la figure unique est un schéma simplifié d'un exemple de machine de mise en oeuvre du procédé de l'invention.

La présente invention est décrite ci-dessous en référence à la fabrication de cartes d'identité, mais il est bien entendu qu'elle n'est pas limitée à cette seule application, et qu'elle peut être mise en oeuvre pour fabriquer des documents sécurisés très divers : passeports, cartes de crédit, badges d'accès à des zones protégées, certificats d'authenticité ...

La machine 1 représentée sur le dessin comporte une première station 2 munie de moyens 3 de support permettant de recevoir des bobines 4 de film photosensible 5. Ce film 5 est protégé sur une de ses faces par un film de Mylar, et sur l'autre face par un film de PVC, par exemple. Le film 5 passe dans un moufle 6 pour arriver à un poste 7 d'enregistrement d'hologrammes, qui est par exemple du type décrit dans le brevet français n° 2 796 184. Au niveau de ce poste 7, le film 5 se présente avec ledit film de Mylar sur sa face supérieure (comme vu sur le dessin), le film de PVC étant sur sa face inférieure. Le poste 7 comprend essentiellement un émetteur laser, un modulateur spatial de lumière commandé par le calculateur de production 59 décrit plus loin (par exemple à cellule à cristaux liquides), des lentilles et des composants optiques pour assurer le guidage et la concentration du faisceau de l'émetteur laser, ainsi que les circuits nécessaires à l'affichage par le modulateur spatial de motifs fournis par une base de données 8. Le poste 7 est suivi d'un poste 9, qui comporte par exemple une imprimante, et qui est chargé d'apposer sur le film 5 une marque d'identification près de chaque hologramme imprimé au poste 7. Cette marque peut, par exemple, être un code à barres, mais il est bien entendu que ce peut être tout autre type de marquage permettant d'identifier facilement et sans ambiguïté chacun des hologrammes parmi un grand nombre (plusieurs milliers d'hologrammes peuvent être formés sur une même bande de film 5). Le poste 9 est suivi d'un poste 10 d'insolation du film 5. Ce poste 10 comporte des lampes à ultraviolets appliquant au film 5 une puissance d'environ 70 mW/cm² par exemple. Chacun des hologrammes peut comprendre au moins l'un des éléments suivants: une photographie identique à celle imprimée sur le document, un nom, un numéro, une autre photographie, un code.

A la sortie du poste 10, on dispose un rouleau 11 permettant de renvoyer le film de protection inférieur 12 (film en PVC) du film 5 vers un rouleau récepteur de bobinage 13, alors que le film photosensible avec son film de protection supérieur (en Mylar) est acheminé vers un poste de lamination 14 en passant devant un dispositif 15 d'élimination d'électricité statique. Le poste 14 comporte deux rouleaux de pression chauffants 16, 17 entre lesquels on fait passer le film photosensible insolé avec son film de protection supérieur et un film 18 colorisant qui est appliqué contre la face inférieure du film photosensible. Ce film 18 provient d'un rouleau débiteur 19 sur lequel ce film est enroulé avec un film de protection (en polypropylène par exemple). Ce film de protection 20 est retiré au fur et à mesure de l'utilisation du film 18 et enroulé sur un rouleau récepteur 21. On fixe un dispositif antistatique 22 autour , ou à proximité, du film 18, juste en aval de l'endroit où il est séparé du film 20. A la sortie du poste 14, on dispose un moufle 23, qui précède un four 24 à circulation d'air chaud dans lequel le film composite 25 issu du poste 14 parcourt à vitesse régulière un trajet pendant un temps de 8 à 20 minutes environ, à une température comprise entre 120 et 180°C environ, selon la couleur finale désirée pour les hologrammes. Ce film 25 comporte les couches suivantes : la couche protectrice initiale (en Mylar par exemple), le film photosensible, le film colorisant 18 et le film de protection (Mylar, par exemple) du film colorisant. A la sortie du four 24, on dispose une chambre de fixation 26 comportant une rampe de lampes à rayons ultraviolets appliquant au film une puissance lumineuse de 5 mW/cm² par exemple.

A la sortie de la chambre 26, on dispose une paire de rouleaux 27, 28 enserrant le film et permettant de délaminer le film 29 de protection du film colorisant. Ce film 29 est enroulé sur un rouleau récepteur 30. En aval des rouleaux 27, 28, on dispose des rouleaux de pression chauffants 31, 32 permettant d'adjoindre au film composite qui y arrive un film adhésif 33, à la place du film protecteur 29 qui vient d'être enlevé. Le film adhésif 33 provient d'un rouleau débiteur 34. Sur ce rouleau 34, le film 33 était enroulé avec un film protecteur supérieur 35 qui est enlevé aussitôt après le passage entre deux rouleaux 36, 37 et enroulé sur un rouleau récepteur 38. Des dispositifs antistatiques 39, 40 sont disposés immédiatement en aval des rouleaux 27, 28 et 31, 32 respectivement.

En aval des rouleaux 31, 32, on dispose un moufle 41 suivi de deux rouleaux presseurs 41 A, 41 B et d'un rouleau 42 sur lequel est enroulé le film protecteur inférieur restant 43 de l'adhésif 33. Le film composite résultant passe ensuite dans un poste 45 de découpe des hologrammes qu'il contient, la découpe laissant subsister le film protecteur supérieur, qui sert ainsi de support de transport aux hologrammes. Après découpe, le résidu, c'est-à-dire la partie 46 devenue inutile du film composite (partie appelée "squelette") est enroulé sur un rouleau récepteur 47. Le "squelette" comprend plusieurs couches formées de parties de films dont la surface n'a pas été utilisée pour les hologrammes, ces films étant : le film photosensible, le film adhésif, le film colorisant et le film supérieur de protection du film photosensible.

Selon une variante de l'invention (représentée en traits interrompus sur le dessin), le film 48 (comportant ledit film protecteur supérieur et les hologrammes) passe entre des rouleaux 48A, 48B qui permettent de lui adjoindre un film de protection 48C provenant d'un rouleau 48D, ce film de protection étant collé sur les hologrammes. Le film composite résultant 48E est enroulé sur un rouleau récepteur 48F, pour être utilisé ultérieurement dans une station 48G d'impression de documents et de report d'hologrammes, d'une façon analogue à celle décrite ci-dessous en référence à la description des éléments 49 à 58. Les éléments 48A à 48G constituent, comme les éléments 49 à 58, une station d'achèvement de réalisation de documents sécurisés.

Si la variante qui vient d'être décrite n'est pas mise en oeuvre, l'ensemble 48 dudit film protecteur supérieur et des hologrammes passe dans un poste 49 de contrôle et de report d'hologrammes sur des documents à sécuriser. Ce poste 49 comprend essentiellement un dispositif comparateur de codes d'identification et un dispositif de report d'hologrammes sur les documents. Ces documents sont imprimés dans un poste d'impression 50 et convoyés jusqu'au poste 49. A la sortie du poste 49, les documents munis de leurs hologrammes passent dans un poste de lamination 51 dans lequel ils sont laminés entre des rouleaux de lamination chauffants 52A, 52B avec un film de protection supérieur 53 et un film de protection inférieur 54 provenant de rouleaux 55, 56, respectivement, La bande laminée ainsi obtenue passe dans un poste de découpe 57, et les documents sécurisés individuels sont stockés temporairement dans un poste récepteur 58.

Un processeur 59 gère l'ensemble des éléments décrits ci-dessus au rythme des images à enregistrer: avance des films et bandes, insolation, four et rampes de révélation, impression des hologrammes depuis la base de données 8, impression des codes d'identification et des documents ...

Le fonctionnement de la machine décrite ci-dessus est le suivant. Le film photosensible 5, stocké sur le rouleau débiteur 3, est tiré de façon discontinue par un moteur pas-à-pas (non représenté) agissant par exemple sur les rouleaux 16, 17. Le moufle 6 évite les à-coups lors du déroulement du film 5 qui se déroule de façon continue du rouleau 3, alors que le moufle 23 permet au film de passer de façon continue à travers le four 24 et au-delà, jusqu'au moufle 41. Le film 5 passe d'abord dans le poste 7, où il est maintenu sur un « master » holographique par aspiration et/ou sous l'effet d'un rouleau qui le plaque contre ce « master ». A ce poste 7, le film photosensible est insolé par un faisceau laser traversant une cellule à cristaux liquides, à laquelle la base de données 8 envoie à chaque fois une information de personnalisation unique (par exemple la photographie du titulaire de chaque carte d'identité correspondante fabriquée par la machine 1). Le « master » est un miroir holographique contenant des informations récurrentes (logos, texte ...) en trois dimensions et éventuellement des sécurités optiques non visibles à l'oeil nu. Le fonctionnement de ce poste d'enregistrement ne sera pas décrit plus en détail, car il est le même que celui décrit dans le susdit brevet français n°2 976 184. Après avoir été insolé dans le poste 7, le film photosensible reçoit au poste 9 une marque de placement et d'identification (code à barres par exemple avec un repère permettant de localiser l'emplacement exact de l'hologramme par rapport à la bande). Ces marques peuvent être imprimées par une imprimante à jet d'encre ou thermique, par exemple. Les marques d'identification permettent d'identifier sans ambiguïté les hologrammes correspondants, de la même façon que sont identifiées les marques des documents imprimés par l'imprimante du poste 50, et donc d'assembler chaque hologramme avec le document correspondant.

Après le poste 9, le film est entraîné vers le poste 10 dans lequel les rayons contenant des ultraviolets fixent l'information enregistrée dans le matériau photosensible. Au poste 14, on ajoute un film colorisant 18 au film photosensible. Ce film photosensible est généralement vert après fixation, et pour en améliorer le contraste et la lisibilité, on lui ajoute ce film colorisant, et ce, par lamination entre les rouleaux chauffants 16, 17, à 120°C par exemple. Ledit moteur pas-à-pas peut par exemple entraîner ces rouleaux 16,17.

Le film composite ainsi obtenu à la sortie des rouleaux 16, 17 est traité dans le four 24, à une température, comprise entre 120°C et 180°C, qui est fonction de la couleur finale désirée pour l'hologramme. L'avance continue du film composite dans le four permet de limiter les déformations du film au contact des rouleaux sur lesquels il passe dans ce four. Selon un exemple de réalisation, le chauffage dans le four est assuré par une circulation d'air chaud avec un débit minimum global d'environ 50 ℓ/mn, cet air étant recyclé à l'intérieur du four afin d'accroître sa stabilité et son homogénéité thermiques. Le four 24 est muni d'un « pantin » 24A, qui est un rouleau à position réglable, ce qui permet d'adapter le temps de séjour du film composite dans le four à la cadence de production de la machine 1 en réglant la longueur parcourue par le film dans le four et de déterminer la couleur finale de chaque hologramme. La rampe 26 de lampes à ultraviolets permet d'arrêter la réaction activée dans le four 24 et de fixer ainsi la couleur de l'hologramme. Les rouleaux 31 et 32 permettent d'ajouter au film composite le film adhésif 33 et de faire avancer de façon continue le film en aval du moufle 23, ces rouleaux étant mus par un moteur à rotation continue.

Les rouleaux de sortie 41 A, 41 B du moufle 41 sont mus par un moteur pas-à-pas, ce qui permet de présenter au poste 45 le film hologramme par hologramme pour pouvoir découper chaque hologramme, après avoir retiré le film protecteur de l'adhésif.

Pour faire correspondre à chaque carte d'identité l'hologramme qui lui est propre, le poste 49 comporte des moyens de lecture de codes à barres et de réticules, un comparateur pour comparer chaque code lu sur la carte d'identité qui se présente à ce poste avec le code lu sur l'hologramme qui s'y présente en même temps, et il comporte également des moyens commandant l'avance du film supportant les hologrammes pour faire parvenir le bon hologramme en face de la carte d'identité qui y est présente. Ce comparateur déclenche des moyens de signalisation ou d'alarme si l'hologramme présent n'est pas le bon, ou bien il peut commander la réimpression par la suite de la carte d'identité pour laquelle l'hologramme correspondant n'est pas trouvé, et même l'hologramme correspondant, pour ne pas avoir à arrêter la machine. Les réticules imprimés sur le film d'hologrammes servent à positionner chacun des hologrammes face à l'emplacement qu'il doit occuper sur la carte d'identité appropriée. Lorsqu'un hologramme est ainsi positionné correctement, un « coin » ou un rouleau chauffant l'applique contre la carte d'identité. Après cette mise en place de l'hologramme, chaque carte d'identité ainsi complétée est acheminée vers les rouleaux de lamination du poste 51.

Bien entendu, les étapes de mise en place des hologrammes sur les cartes d'identité peuvent être assurées de façon équivalente en mettant en oeuvre d'autres étapes connues en soi. Par exemple, les opérations de découpe des hologrammes et de mise en place sur les cartes d'identité peuvent être couplées, ce qui permet de garder le film protecteur supérieur (Mylar) de chaque hologramme. En variante, ce film protecteur peut être découpé partiellement (à 99 % par exemple) pour mieux guider les hologrammes.

## Revendications

1. Procédé de réalisation de documents sécurisés à hologrammes, **caractérisé par le fait qu'**il consiste, d'une part, à enregistrer en série (7) sur une bande de film photosensible (5) une succession d'hologrammes de volume relatifs chacun respectivement à une ou plusieurs informations d'un document correspondant à sécuriser, chacun de ces hologrammes étant accompagné d'un code d'identification et de positionnement imprimé sur le même film, à révéler (7) et à fixer (10) les hologrammes ainsi enregistrés, et d'autre part à imprimer en même temps (50) les documents d'identité avec leurs codes d'identification individuels qui sont les mêmes que ceux des hologrammes correspondants respectifs, à ajouter un adhésif aux hologrammes après leur fixation, et à assembler par collage chaque hologramme avec le document correspondant après vérification de la concordance de leurs codes d'identification respectifs.

2. Procédé selon la revendication 1, **caractérisé en ce que** l'on recouvre d'une protection chaque document muni de son hologramme.

3. Procédé selon la revendication 1, **caractérisé en ce que** la protection ne peut pas être enlevée sans destruction d'une des parties du document.

4. Procédé selon l'une des revendications précédentes, **caractérisé en ce qu'**après fixation de l'information holographique enregistrée dans le film photosensible, on lui ajoute un film colorisant (18).

5. Procédé selon l'une des revendications précédentes, **caractérisé en ce que** chacun des hologrammes comprend au moins l'un des éléments suivants: une photographie identique à celle imprimée sur le document, un nom, un numéro, une autre photographie, un code.

6. Machine de réalisation de documents sécurisés à hologrammes, **caractérisée en ce qu'**elle comporte une station d'enregistrement holographique et d'impression de code d'identification (7), une station de révélation d'hologramme (10), une station d'ajout de film colorisant (14), une station de fixation (24, 26), une station d'ajout d'adhésif (31, 32, 38), une station de découpage des hologrammes (45), un rouleau récepteur des résidus de découpage (47) et une station d'achèvement de réalisation de documents sécurisés (48A à 48G ou 49 à 58).

7. Machine selon la revendication 6, **caractérisée en ce que** la station d'achèvement de réalisation de documents est disposée après la station de découpage des hologrammes et comporte une station d'impression de documents (50) et une station de collage des hologrammes sur les documents (49).

8. Machine selon la revendication 6, **caractérisée en ce que** la station d'achèvement de réalisation de documents comporte, après la station de découpage des hologrammes, des moyens de collage (48A, 48B) d'un film protecteur (48C), et des moyens de stockage (48F), et une station (48G) d'impression de documents et de report d'hologrammes.

9. Machine selon la revendication 6, 7 ou 8, **caractérisée en ce qu'**elle comporte un moufle (6) en amont de la station d'enregistrement holographique, un moufle (23) en amont de la station de fixation et un moufle (41) en amont de la station de collage des hologrammes sur les documents.

10. Machine selon l'une des revendications 6 à 9, **caractérisée en ce qu'**elle comporte une base de données (8) reliée à la station d'enregistrement holographique et à la station d'impression de documents.

11. Machine selon l'une des revendications 6 à 10, **caractérisée en ce qu'**elle comporte dans la station d'achèvement de réalisation de documents un comparateur relié d'une part à des moyens de lecture de codes sur les documents et sur les hologrammes, et d'autre part à des moyens de signalisation ou d'alarme.

12. Machine selon l'une des revendications 6 à 11, **caractérisée en ce qu'**elle comporte un rouleau à position réglable (24A) permettant de déterminer la couleur finale de chaque hologramme.

## Claims

1. Method of producing hologram-secured documents, **characterized in that** it consists, on the one hand, in serially recording (7) on a tape of photosensitive film (5) a succession of volume holograms each relating respectively to one or more items of information of a corresponding document to be made secure, each of these holograms being accompanied by an identification and positioning code printed on the same film, in developing (7) and in fixing (10) the holograms thus recorded, and on the other hand in printing at the same time (50) the identity documents with their individual identification codes which are the same as those of the respective corresponding holograms, on adding an adhesive to the holograms after their fixing, and in adhesively bonding together each hologram and the corresponding document after verifying that their respective identification codes match.

2. Method according to Claim 1, **characterized in that** each document furnished with its hologram is covered with a protection.

3. Method according to Claim 1, **characterized in that** the protection cannot be removed without destroying one of the parts of the document.

4. Method according to one of the preceding claims, **characterized in that** after fixing the holographic information recorded in the photosensitive film, a colorant film (18) is added thereto.

5. Method according to one of the preceding claims, **characterized in that** each of the holograms comprises at least one of the following elements: a photograph identical to that printed on the document, a name, a number, another photograph, a code.

6. Machine for producing hologram-secured documents, **characterized in that** it comprises a holographic recording and identification code printing station (7), a hologram development station (10), a station (14) for adding colourant film, a fixing station (24, 26), a station (31, 32, 38) for adding adhesive, a station for cutting out the holograms (45), a roll for taking up the cutout remains (47) and a station for completing production of secure documents (48A to 48G or 49 to 58).

7. Machine according to Claim 6, **characterized in that** the station for completing production of documents is placed after the station for cutting out the holograms and comprises a station for printing documents (50) and a station for bonding the holograms to the documents (49).

8. Machine according to Claim 6, **characterized in that** the station for completing production of documents comprises, after the station for cutting out the holograms, means of bonding (48A, 48B) of a protective film (48C), and means of storage (48F), and a station (48G) for printing documents and for transferring holograms.

9. Machine according to Claims 6, 7 or 8, **characterized in that** it comprises a pulley block (6) upstream of the holographic recording station, a pulley block (23) upstream of the fixing station and a pulley block (41) upstream of the station for bonding the holograms to the documents.

10. Machine according to one of Claims 6 to 9, **characterized in that** it comprises a database (8) linked to the homographic recording station and to the station for printing documents.

11. Machine according to one of Claims 6 to 10, **characterized in that** it comprises in the station for completing the production of documents a comparator linked on the one hand to means of reading codes on the documents and on the holograms, and on the other hand to means of signalling or of alarm.

12. Machine according to one of Claims 6 to 11, **characterized in that** it comprises a roll with adjustable position (24A) making it possible to determine the final colour of each hologram.

## Patentansprüche

1. Verfahren zur Herstellung von Sicherheitsdokumenten mit Hologrammen, **dadurch gekennzeichnet, dass** es einerseits darin besteht, seriell (7) auf einem lichtempfindlichen Filmstreifen (5) eine Folgte von Volumenhologrammen zu speichern, die sich je auf eine oder mehrere Informationen eines entsprechenden zu sichernden Dokumentes beziehen, wobei jedes dieser Hologramme von einem Identifikations- und Positionierungscode begleitet wird, der auf den gleichen Film gedruckt ist, die so gespeicherten Hologramme zu entwickeln (7) und zu fixieren (10), und andererseits darin besteht, gleichzeitig die Identitätsdokumente mit ihren individuellen Identifikationscodes zu drucken (50) , die die gleichen wie diejenigen der jeweiligen entsprechenden Hologramme sind, nach ihrer Fixierung einen Klebstoff zu den Hologrammen hinzuzufügen und nach Überprüfung der Übereinstimmung ihrer jeweiligen Identifikationscodes jedes Hologramm mit dem entsprechenden Dokument durch Kleben zusammenzufügen.

2. Verfahren nach Anspruch 1, **dadurch gekennzeichnet, dass** jedes mit seinem Hologramm versehene Dokumente mit einem Schutz überzogen wird.

3. Verfahren nach Anspruch 1, **dadurch gekennzeichnet, dass** der Schutz nicht ohne Zerstörung eines der Bereiche des Dokuments entfernt werden kann.

4. Verfahren nach einem der vorhergehenden Ansprüche, **dadurch gekennzeichnet, dass** der im lichtempfindlichen Film gespeicherten holografischen Information nach ihrer Fixierung ein färbender Film (18) hinzugefügt wird.

5. Verfahren nach einem der vorhergehenden Ansprüche, **dadurch gekennzeichnet, dass** jedes der Hologramme mindestens eines der folgenden Elemente aufweist: eine Fotographie gleich derjenigen, die auf das Dokument gedruckt ist, einen Namen, eine Nummer, eine andere Fotografie, einen Code.

6. Maschine zur Herstellung von Sicherheitsdokumenten mit Hologrammen, **dadurch gekennzeichnet, dass** sie eine Station zur holografischen Speicherung und zum Druck eines Identifikationscodes (7), eine Station zur Hologrammentwicklung (10), eine Station zum Hinzufügen eines färbenden Films (14), eine Fixierungsstation (24, 26), eine Station zum Hinzufügen eines Klebstoffs (31, 32, 38), eine Station zum Ausschneiden der Hologramme (45), eine Aufnahmerolle der Schnittreste (47) und eine Station zur Fertigstellung der Herstellung von Sicherheitsdokumenten (48A bis 48G oder 49 bis 58) aufweist.

7. Maschine nach Anspruch 6, **dadurch gekennzeichnet, dass** die Station zur Fertigstellung der Herstellung von Dokumenten hinter der Station zum Ausschneiden der Holgramme angeordnet ist und eine Station zum Druck von Dokumenten (50) und eine Station zum Kleben der Hologramme auf die Dokumente (49) aufweist.

8. Maschine nach Anspruch 6, **dadurch gekennzeichnet, dass** die Station zur Fertigstellung der Herstellung von Dokumenten nach der Station zum Ausschneiden der Hologramme Einrichtungen zum Kleben (48A, 48B) eines Schutzfilms (48C) und Speichereinrichtungen (48F) und eine Station (48G) zum Drucken von Dokumenten und zur Übertragung von Hologrammen aufweist.

9. Maschine nach Anspruch 6, 7 oder 8, **dadurch gekennzeichnet, dass** sie einen Flaschenzug (6) vor der Station zum holografischen Speichern, einen Flaschenzug (23) vor der Fixierungsstation und einen Flaschenzug (41) vor der Station zum Kleben der Hologramme auf die Dokumente aufweist.

10. Maschine nach einem der Ansprüche 6 bis 9, **dadurch gekennzeichnet, dass** sie eine Datenbank (8) aufweist, die mit der Station zum holografischen Speichern und mit der Station zum Drucken von Dokumenten verbunden ist.

11. Maschine nach einem der Ansprüche 6 bis 10, **dadurch** gekenntzeichnet, dass sie in der Station zur Fertigstellung der Herstellung von Dokumenten einen Komparator aufweist, der einerseits mit Einrichtungen zum Lesen von Codes auf den Dokumenten und auf den Hologrammen und andererseits mit Anzeige- oder Alarmeinrichtungen verbunden ist.

12. Maschine nach einem der Ansprüche 6 bis 11, **dadurch gekennzeichnet, dass** sie eine Rolle mit einstellbarer Stellung (24A) aufweist, die es ermöglicht, die endgültige Farbe jedes Hologrammes zu bestimmen.
